# EUROPEAN PATENT SPECIFICATION

(11) **EP 1 123 657 B1**
(45) Date of publication and mention of the grant of the patent: **17.11.2004**
(21) Application number: 00102667.3
(22) Date of filing: 09.02.2000
(51) Int. Cl.: A23B 7/06, A23L 1/272, A23B 7/05, A23B 7/08, A23B 7/157

(54) **A process to preserve green colour in frozen vegetables**
Verfahren zur Aufrechterhaltung der grünen Farbe von gefrorenen Gemüsen
Procédé pour conserver la couleur verte des légumes surgelés

(43) Date of publication of application: 16.08.2001
(73) Proprietor: SOCIETE DES PRODUITS NESTLE S.A., 1800 Vevey (CH)
(72) Inventor: Sundara, Venkata-Ramana, 1012 Lausanne (CH); Berberat, Alexis, 1814 La Tour-de-Peilz (CH)
(74) Representative: Thomas, Alain

(56) References cited:
- GB-A- 772 062
- US-A- 2 189 774
- US-A- 4 473 591
- US-A- 4 701 330
- US-A- 5 397 584
- US-A- 5 942 270

## Description

The present invention concerns a process to preserve green colour in frozen vegetables.

Before carrying out the freezing of green vegetables, it is known to make a blanching to inactivate the natural enzymes present in the vegetables. The blanching consists of soaking the vegetables in boiling water and holding said vegetables for sufficient time to inactivate the above mentioned enzymes. The Japanese Patent 05103587 in the name of Hokkaido Reito Shokuhin Kyokai concerns a process wherein salad vegetables are blanched and then soaked in a saccharide solution. The general problem concerned with the blanching is that during said blanching the vegetable cells are damaged and the acid present in said cells comes into contact with chlorophyll pigments, which leads to a loss of the green color of the concerned vegetables. This problem is particularly critical in the case of freezing and thawing vegetables. There is furthermore a problem of texture alteration during defrosting of said vegetables.

The aim of the present invention is to allow a blanching and freezing of green vegetables without or with a minimum of loss of the green colour of vegetables and with a minimized alteration of the texture by defrosting.

The present invention concerns a process to preserve green colour in frozen vegetables, which comprises :
- soaking the vegetables in an alkaline solution during 30 to 60 min. around room temperature,
- washing the vegetables and blanching them in alkaline conditions at a temperature comprised between 95 and 100 °C,
- washing again the vegetables and soaking them in a sugar solution at around room temperature during 20 to 60 min and
- washing and freezing the obtained vegetables.

The objective of the present invention is to minimize the acidic environment in vegetable tissue in order to retard degradation of green pigment. This degradation leads to undesirable olive-brown compounds. This objective is reached by proceeding before the blanching to a pre-treatment with an aqueous solution of alkalising agents. The type of the alkaline agent used is not critical. But the alkaline must be acceptable in the food industry. Because of the cost of the solution used, it is preferred to use a solution of Na₂CO₃. The treatment is preferably carried out at atmospheric pressure for around 30 min and with a concentration of Na₂CO₃ of around 10-20 g/l. It is then possible with said treatment to bring the pH of the cells to alkaline conditions. After this treatment, the vegetables are washed with water and cut into pieces before the blanching. The size of said pieces is not critical.

The green vegetables treated according to the invention can be any type of green vegetables, for example green beans, broccoli, green herbs, basil, green peas. These vegetables can be used in pesto, in tomato sauce, in frozen/defrosted or refrigerated salads or other dishes, in other concentrated or full strength sauces.

The blanching is carried out in an alkaline environment, like in the presence of MgO and NaHCO₃ to reach a pH comprised between 7 and 9. The concentration of these compounds is normally around 1-2 g/l for the first and between 1 and 5 g/l for the second. The blanching is carried out in 2 to 5 min. and the blanched vegetables are brought to room temperature by washing with cold water.

The last step of the process of the invention consists of soaking the vegetables in a sugar solution. The sugar used can be any type of sugar. For cost reasons, it is preferable to use a sucrose solution. This step is required to concentrate the colour in the vegetables. The concentration of sugar is normally around 100-200 g/l.

After this treatment, the vegetables are again washed with water and frozen.

The h° value gives a good measurement of the green colour of the vegetables. h° is the hue angle, which indicates the dominant colour of the sample. h° varies from 0° (red), through 90° (yellow), 180°(green) and 270° (blue). So, the nearer to 180°, the greener the vegetables. The instrumental colour measurements in vegetables were performed using a "Macbeth", Colour-eye 580 spectrophotometer equipped with a CIE standard daylight illumination source D₆₅.

By considering green beans, we obtain a value of 110° for untreated vegetables after thawing and keeping under refrigeration 5 days. On the contrary, with the same beans , but treated according to the invention, the h° value is around 118°.

The description is further illustrated in relation with the example.

### Example

French beans were trimmed, soaked in a 2 % (20g/l) sodium carbonate solution for 30 min. at 20 °C at atmospheric pressure. The beans are then washed free of alkali, cut to desirable size and then blanched in boiling water containing 0.1 % of magnesium oxide and 0.1 % sodium bicarbonate for 5 minutes. The vegetables are then soaked in a sucrose solution (200g/l) for 60 min. at 20 °C by atmospheric pressure, drained and frozen to -20°C.
The beans after storage of several months are defrosted. They retained attractive green colour and acceptable texture firmness as compared to samples blanched without any treatment.

## Claims

1. A process to preserve green colour in frozen vegetables, which comprises :
- soaking the vegetables in an alkaline solution during 30 to 60 min. around room temperature,
- washing the vegetables and blanching them in alkaline conditions at a temperature comprised between 95 and 100 °C,
- washing again the vegetables and soaking them in a sugar solution at around room temperature during 20 to 60 min and
- washing and freezing the obtained vegetables.

2. A process according to claim 1, wherein the vegetables are taken from the group consisting of green beans, broccoli, green herbs, basil, green peas.

3. A process according to any of claims 1 or 2, wherein the vegetables are cut before the blanching.

4. A process according to any of claims 1 to 3, wherein the alkaline solution is a solution of Na₂CO₃.

5. A process according to any of claims 1 to 4, wherein the blanching is carried out during 2 to 5 min.

6. A process according to any of claims 1 to 5, wherein the blanching solution has a pH comprised between 7 and 9.

7. A process according to any of claims 1 to 6, wherein the sugar solution is a sucrose solution.

## Patentansprüche

1. Verfahren zur Konservierung der grünen Farbe in gefroreren Gemüsen, das umfaßt:
- Einweichen der Gemüse in einer alkalischen Lösung für 30 bis 60 min bei etwa Raumtemperatur,
- Waschen der Gemüse und ihr Blanchieren unter alkalischen Bedingungen bei einer Temperatur, die zwischen 95 und 100°C liegt,
- neuerliches Waschen der Gemüse und ihr Einweichen in einer Zuckerlösung bei etwa Raumtemperatur für 20 bis 60 min, und
- Waschen und Gefrieren der erhaltenen Gemüse.

2. Verfahren nach Anspruch 1, wobei die Gemüse aus der Gruppe ausgewählt sind, die besteht aus grünen Bohnen, Broccoli, grünen Kräutern, Basilikum, grünen Erbsen.

3. Verfahren nach irgendeinem der Ansprüche 1 oder 2, wobei die Gemüse vor dem Blanchieren geschnitten werden.

4. Verfahren nach irgendeinem der Ansprüche 1 bis 3, wobei die alkalische Lösung eine Lösung von Na₂CO₃ ist.

5. Verfahren nach irgendeinem der Ansprüche 1 bis 4, wobei das Blanchieren für 2 bis 5 min durchgeführt wird.

6. Verfahren nach irgendeinem der Ansprüche 1 bis 5, wobei die Blanchierlösung einen pH aufweist, der zwischen 7 und 9 liegt.

7. Verfahren nach irgendeinem der Ansprüche 1 bis 6, wobei die Zuckerlösung eine Saccharoselösung ist.

## Revendications

1. Procédé pour préserver la couleur verte des légumes congelés, qui comprend les étapes consistant à :
- faire tremper les légumes dans une solution alcaline pendant 30 à 60 min au voisinage de la température ambiante,
- laver les légumes et les blanchir dans des conditions alcalines à une température comprise entre 95 et 100°C,
- laver de nouveau les légumes et les tremper dans une solution de sucre au voisinage de la température ambiante pendant 20 à 60 min ; et
- laver et congeler les légumes obtenus.

2. Procédé selon la revendication 1, dans lequel les légumes sont choisis dans le groupe formé par les haricots verts, les brocolis, les fines herbes, le basilic, les petits pois.

3. Procédé selon l'une quelconque des revendications 1 ou 2, dans lequel les légumes sont coupés avant le blanchiment.

4. Procédé selon l'une quelconque des revendications 1 à 3, dans lequel la solution alcaline est une solution de Na₂CO₃.

5. Procédé selon l'une quelconque des revendications 1 à 4, dans lequel le blanchiment est effectué pendant 2 à 5 min.

6. Procédé selon l'une quelconque des revendications 1 à 5, dans lequel la solution de blanchiment a un pH compris entre 7 et 9.

7. Procédé selon l'une quelconque des revendications 1 à 6, dans lequel la solution de sucre est une solution de saccharose.
